# EUROPÄISCHE PATENTSCHRIFT

(11) **EP 1 032 528 B1**
(45) Veröffentlichungstag und Bekanntmachung des Hinweises auf die Patenterteilung: **10.10.2001**
(21) Anmeldenummer: 98956927.2
(22) Anmeldetag: 19.11.1998
(51) Int. Cl.: B62D 25/14, B60H 1/00

(54) **COCKPIT FÜR KRAFTFAHRZEUGE**
MOTOR VEHICLE COCKPIT
ENSEMBLE PLANCHE DE BORD POUR VEHICULES A MOTEUR

(30) Priorität: 20.11.1997 DE 19753178
(43) Veröffentlichungstag der Anmeldung: 06.09.2000
(73) Patentinhaber: SAI Automotive SAL GmbH, 76732 Wörth am Rhein (DE)
(72) Erfinder: RAHMSTORF, Peter, F-38380 Saint Laurent du Pont (FR); CREUTZ, Lydia, F-67340 Ingwiller (FR)
(74) Vertreter: Pfenning, Meinig & Partner GbR
(86) Internationale Anmeldenummer: EP9807372
(87) Internationale Veröffentlichungsnummer: WO9926833

(56) Entgegenhaltungen:
- EP-A- 0 744 309
- DE-A- 3 447 185
- DE-A- 3 806 783
- DE-A- 4 337 467
- DE-A- 19 527 627
- DE-C- 4 401 022
- DE-C- 4 409 081
- FR-A- 2 106 069
- FR-A- 2 623 776
- FR-A- 2 669 885
- US-A- 2 864 590
- US-A- 5 333 901
- US-A- 5 387 023

## Beschreibung

Die Erfindung betrifft ein Cockpit gemäß dem Oberbegriff des Anspruchs 1.

Fahrzeugcockpits sind beim derzeitigen Stand der Technik komplexe, an den Fahrzeugtyp angepaßte Systeme, die in der Regel aus einem Querträger, aus den Luftführungselementen, einer Schalenkonstruktion, die die Sichtseite des Cockpits vorgibt, den Bedienelementen und einem Beifahrerairbag bestehen. In DE 34 47 185 A und in EP 0 515 287 A sind derartige Cockpits beschrieben. Die Zielsetzung ist dabei, möglichst weitgehend vormontierte und vor dem Einbau in das Fahrzeug auf Funktion geprüfte Baueinheiten zu schaffen, die gegebenenfalls auch noch zu einer Versteifung der Karosserie beitragen können. Derartige Lösungen sind fahrzeugspezifisch, d.h. in Konstruktion und Fertigung nur für einen bestimmten Fahrzeugtyp geeignet. Die DE 36 11 486 Al beschreibt eine Lösung, die geeignet ist, bei einem bestimmten Fahrzeugtyp mit geringerem Aufwand den Sicherheitsstandard nach- oder umzurüsten. Der Querträger dieses Systems ist zwar vereinfacht, aber immer noch für einen Fahrzeugtyp verwendbar. In der älteren, nicht vorveröffentlichten Anmeldung DE 196 26 441 A ist ein Cockpit beschrieben, dessen Querträger modular aus Bauteilen besteht, die zum überwiegenden Teil nicht mehr fahrzeugspezifisch sind, die also für mehrere Fahrzeugtypen einsetzbar sind. Das Luftführungssystem ist bei dieser Ausführung Bestandteil des Querträgers, wodurch sich eine komplexe Konstruktion ergibt, die für den Anschluß des Luftleitsystems an die Sichtschale des Cockpits zusätzlichen Aufwand erfordert, beispielsweise eine Geräusch- und Wärmedämmung. In einer Ausführung ist vorgesehen, daß das Gehäuse der Heiz- bzw. Klimaanlage ebenfalls integraler Bestandteil des Querträgers ist, wodurch Fügestellen entstehen, die die Funktion des Querträgers als Karosserieversteifung beeinträchtigen können. Außerdem muß in diesem Falle das Gehäuse entsprechende Kräfte aufnehmen können, also gegenüber dem ursprünglichen Zweck überdimensioniert sein, was sowohl bezüglich der Fertigung als auch bezüglich des Gewichts nicht optimal ist.

In der DE 44 45 381 A wird ein Cockpit beschrieben, dem zwei hintereinander angeordnete Querträger zugeordnet sind. Der in Fahrtrichtung vordere Träger verläuft dabei im Innern der Karosserie unter der Frontscheibe, der zweite Querträger trägt, wie auch sonst üblich, das eigentliche Cockpit, das die Bedienungs- und Funktionselemente vorgeprüft enthält.

Obwohl in der DE 44 45 381 A nicht darauf verwiesen wird, hat die Verwendung von zwei Querträgern sicherheitstechnische Vorteile bei einem Frontalaufprall.

Auf diesen Aspekt verweist die gattungsgemäße DE 195 27 627 A, in der ein integrierter Sicherheitsträger für Frontlenker-Lastkraftwagen oder -Omnibusse beschrieben wird, der als Basis für das Armaturenbrett dient. Dabei verläuft ein vorderer Querträger wieder im Innern der Karosserie unter der Frontscheibe, der zweite, fahrerseitige Querträger ist mit dem ersten durch Sprossen, die parallel zur Fahrtrichtung verlaufen, zu einem Sicherheitsträger verbunden, wobei die Sprossen als energieverzehrende Deformationselemente wirken sollen. Beide Druckschriften beziehen sich auf "stumpfnasige" Fahrzeuge, die erhöhten Sicherheitsbedarf bei einem Frontalaufprall haben, da eine Knautschzone fehlt. Die DE 44 45 381 A hat nur geringen Sicherheitsgewinn, da beide Querträger "entkoppelt" sind, also keine zusätzliche Knautschzone bilden.

Bei der DE 195 27 627 A besteht die Kopplung zwar, aber die Richtung der Kopplungssprossen parallel zur Fahrtrichtung birgt die Gefahr, daß bei einem Abriß einer Sprosse diese dolchähnliche auf die Insassen zukommmen kann, mit dem entsprechenden Verletzungsrisiko.

Aufgabe der vorliegenden Erfindung ist es daher, ein vormontierbares und vorprüfbares Fahrzeugcockpit anzugeben, das bei Fahrzeugen mit einem unter Frontscheibe verlaufenden Querträger bei vereinfachter Bauart und definiertem Festigkeitsverhalten geeignet ist, mehr als bisher aktiver Bestandteil eines Insassen-Schutzsystems bei Frontalaufprall zu sein.

Diese Aufgabe wird gelöst durch die kennzeichnenden Merkmale des Anspruchs 1; die Ansprüche 2 bis 22 geben vorteilhafte Weiterbildungen der Erfindung an. Dadurch, daß zumindest zwischen dem Kastenprofil und dem Querträger ein flächiges Formstück als Montageplatte für Funktions- und Bedienelemente montiert ist, das das Kastenprofil und den Querträger im Falle eines Frontalaufpralles energieverzehrend koppelt, ergeben sich die folgenden Vorteile.

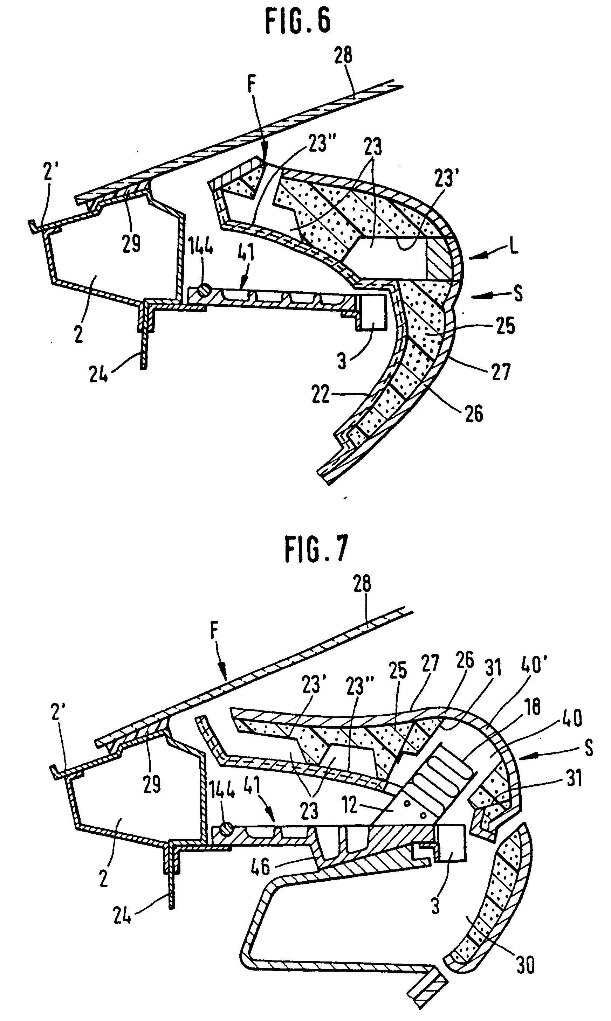

Ein derartiges Formstück ist eine hervorragende Montageplattform für Funktions- und Bedienungselemente, sehr viel variabler als beispielsweise die Anordnung dieser Elemente nur am Querträger, wie beim Stand der Technik (s. fig. 5). Außerdem kann ein derartiges plattenförmiges Formstück, wenn es aus verformbaren Werkstoffen zweckmäßig gestaltet ist, Stoßenergie durch Verformung absorbieren und dabei Kastenprofil und Querträger über die ganze Fahrzeugbreite linienförmig miteinander verbinden zu einem in sich geschlossenen Sicherheitssystem, bei dem der gesamte Zwischenraum zwischen Kastenprofil und Querträger zur Energieabsorption herangezogen wird, und bei dem vor allem die Verletzungsgefahr an abgerissenen Kopplungselementen, die in Richtung Innenraum angeordnet sind, entfällt.

Eine zweckmäßige Formgestaltung besteht beispielsweise darin, daß das flächige Formstück versteifende Rippen besitzt, die in besonders vorteilhafter Weise in ihrer Mehrzahl näherungsweise parallel zum Querträger orientiert sind. In diesem Falle werden die versteiften, und damit vermehrt energieabsorbierenden Flächenbereiche zeitlich nacheinander verformt, wodurch die Stoßzeit verlängert und die Beschleunigungskraft gemindert wird.

Von Vorteil ist es auch, wenn der Querträger in das Formstück baueinheitlich integriert, d.h. mit dem Formstück gemeinsam gefertigt ist. Herstellung und Handhabung eines derartigen Formstückes und des gesamten Cockpits vereinfachen sich so erheblich. Eine gute Möglichkeit, den Querträger in das Formstück zu integrieren, ist die Ausführung als Metall-Kunstoff-Hybridkonstruktion; natürlich ist in dieser Technik auch die Fertigung nur des flächigen Formteiles möglich und gegebenenfalls zweckmäßig. Eine weitere vorteilhafte Gestaltungsmöglichkeit ist eine entsprechende Ausführung als Blechformteil, etwa nach Art eines Well- oder Trapezbleches. Auch bei einem Blechformteil läßt sich der Querträger baueinheitlich integrieren.

Infolge der unvermeidlichen Toleranzen der Rohkarosserien ist beim Einbau eines Cockpitmoduls die Möglichkeit eines Toleranzausgleichs unabdingbar. Der Stand der Technik bietet hier eine Vielzahl möglicher Systeme an, teilweise mit dem Nachteil, daß die Verbindung zwischen Cockpit und Karosserie eine Schachstelle ist. Bei dem Cockpit kann eine derartige Schachstelle vermieden werden, wenn zumindest der Querträger, bei integrierter Ausführung des Gesamtelements, im Bereich der A-Säulen mithilfe von toleranzausgleichenden Schrägflächen befestigt wird. Diese Schrägflächen liegen an entsprechenden Schrägflächen an den A-Säulen an, an denen sie befestigbar sind. Die in der Draufsicht trapezförmige Gesamtbefestigung des Cockpits ermöglicht sowohl einen Ausgleich der Breitentoleranz der Karosserie, als auch dabei immer eine vollflächige Auflagefläche der Befestigungslaschen.

Das erfindungsgemäße flächige Formstück ist sozusagen eine natürliche Trennungsebene zwischen den Elementen des Fußraumes und denen der eigentlichen Cockpitseite. Sieht man von einer Vielzahl von Elementen des Cockpits ab, wie beispielsweise Anzeige- und Kontrollinstrumente, Airbag, Schalter usw., die statt am Querträger, wie beim Stand der Technik, einfacher auf dem Formstück, der natürlichen Trennebene also, vormontiert werden können, weil die Fläche bessere Anordnungsmöglichkeiten bietet als die "Linie" eines Querträgers, so gliedert die Trennebene des Formstücks die Hauptbestandteile eines vormontierten Cockpits übersichtlicher als bisher:
Auf der Oberseite des Formstückes ist ein Luftverteilungssystem fest montiert, während ein Heiz- und/oder Klimagerät fest mit der gegenüberliegenden Fußraumseite verbunden ist. Es werden bei dieser Anordnung keinerlei flexible Verbindungen mehr zwischen Heiz- und/oder Klimagerät benötigt. Außerdem kann, wenn das Gehäuse des Heiz- und/oder Klimagerätes stabil selbsttragend ausgebildet ist, diese Einheit als zusätzliche Abstützung des Cockpits am Fahrzeugboden genutzt werden. Das Formstück zwischen dem Kastenprofil und dem Querträger bietet an seiner Unterseite soviel Raum, daß auch eine Baueinheit, die die Lenksäule, das Pedalwerk und eine abdichtbare Durchführung für den Kabelbaum vom Motorraum her umfaßt, dort untergebracht werden kann. Diese Baueinheit ist mithilfe von Metall-Gummielementen (Schwingmetall) flexibel an der Unterseite des Formstückes vormontiert und kann dadurch Einbautoleranzen ausgleichen. Nach dem Einbau wird die komplette Einheit am Frontblech der Fahrgastzelle fixiert, vorzugsweise durch Schrauben. Lenkhilfen und Bremskraft verstärken können in diese Einbaueinheit motorseitig integriert sein. Beifahrerseitig kann in gleicher Weise eine komplette Handschuhfacheinheit mit Deckelklappe und eventuellen Zusatzeinbauten an der Unterseite des Formstückes befestigt werden, wobei diese Lösung deutlich mehr Raum bietet als der übliche Stand der Technik. Die Montagemöglichkeit für die Fußraum-Baugruppen kann noch dadurch verbessert werden, daß das Formstücke an seiner Unterseite angeformte, geneigte Montageflächen besitzt, die zur Fahrzeuglängsachse symmetrisch ausgebildet sein können, um beispielsweise für Rechtslenker die gleichen Formstücke verwenden zu können.

Da es das flächige Formstück ermöglicht, alle Funktions- und Bedienungselemente optimal anzuordnen und vorzumontieren, kann die Sichtschale, die das Bild des Fahrzeuginnenraumes bestimmt, ausschließlich Abdeckfunktionen haben. Sie kann demzufolge gewichtsmäßig optimiert und leicht auswechselbar gestaltet werden, beispielsweise um mehrere Ausstattungsvarianten zu berücksichtigen.

Es ist aber auch möglich und in vielen Fällen vorteilhaft, das Luftverteilungssystem nicht auf das Formstück zu montieren, sondern für die Luftführung die Sichtschale selbst zu verwenden. Realisierbar ist diese dadurch, daß zwei dünne Formschalen miteinander verbunden werden. Diese Formschalen, die das Luftführungssystem vorgeben, sind von einem voluminösen Hartschaum überdeckt und durch diesen verbunden. Der Formkörper bestimmt das Erscheinungsbild des Cockpits und dient zugleich dem Insassenschutz. Der Hartschaum ist gleichzeitig eine gute Wärme- und Schallisolierung. Diese Schale ist einfach und schnell entfernbar, da sie nicht mit der Karosserie, sondern nur mit dem Formstück und/oder dem Querträger verbunden ist. Die auf dem Formstück montierten Bedienungs- und Funktionselemente sind dann gut zugänglich; die Wartung dieser Elemente und eine Um- bzw. Nachrüstung des Cockpits ist bei dieser "Konstruktion von innen nach außen" ebenso problemlos möglich wie bei einer nur abdeckenden Sichtschale, desgleichen eine Änderung des Styling durch einfachen Wechsel der Sichtschale, sei es innerhalb einer Typenreihe als Variante oder als Umrüstung bei einem Wechsel der Benutzergewohnheiten. Die Oberfläche der Sichtschalen wird dem Stand der Technik entsprechend durch eine schaumstoffhinterlegte Folie, durch eine Slush-Haut oder durch eine Lederkaschierung bestimmt. Alle Oberflächenvarianten können dabei in der gleichen Fertigungsanlage realisiert werden, so daß mit einem derartigen Aufbau der Sichtschale allen Forderungen der Designer entsprochen werden kann.

Eine hinsichtlich Gewicht, Funktion und Fertigung vorteilhafte Ausführung der Sichtschale des Cockpitsystems ergibt sich bei nachstehendem Aufbau: Eine Trägerschale aus an sich hierfür üblichem Werkstoff, beispielsweise aus einem Holzfaserwerkstoff, trägt das aus dünnen Formschalen gefügte Luftführungssystem. Die Formschalen sind in diesem Falle Blech-Preßteile, ohne daß dies zwingend notwendig wäre. Tiefgezogene Schalen aus Hartkunststoff wären ebenso geeignet. Besonders in der Blechausführung versteift das Luftführungssystem die Sichtschale garantiert hinreichende Maßstabilität. Das Luftführungssystem ist mit einem Formkörper überdeckt und flächig verbunden, der aus formstabilem Polyurethan-Partikelschaum besteht. Die Sichtseite des Formkörpers ist mit einer Kaschierungsfolie überzogen, die mit einer Weichschaumschicht hinterfüttert ist, um eine angenehme Griffigkeit der Oberfläche herzustellen. Eine derart strukturierte Sichtschale kann in einem Werkzeug in mehreren Beschickungsstufen verwirklicht werden, beginnend beispielsweise mit dem Vakuum-Tiefziehen einer schaumstoffhinterlegten Kaschierfolie. Die Verwendung von PUR-Partikelschaum für den Formkörper trägt zu einer Verkürzung der Taktzeit bei, da die Entwicklungszeit anderer Schaumsysteme meist länger ist. Besteht die Trägerschale aus einem geformten Holzfaserwerkstoff, so ergibt sich der Vorteil, daß die Luftdurchlässigkeit dieses Werkstoffes eine störungsfreie Schaumentwicklung begünstigt.

Enthält die Sichtschale einen durch eingeschäumte Teile gebildeten Führungskanal für den Beifahrerairbag, so kann der Airbag getrennt von der Sichtschale am Formstück befestigt sein, was das Entfernen oder Wechseln der Sichtschale erleichtert. Der Führungskanal des Beifahrerairbags kann mit den üblichen Klappensystemen abgedeckt werden. Besonders vorteilhaft ist es, diese Abdeckung in einem Arbeitsgang mit der Sichtschalenfertigung als "unsichtbare" Abdeckung auszubilden.

Erfindungsgemäß ist die Sichtschale von der Karosserie getrennt, d.h. sie ist nur am Formstück und/oder am Querträger befestigt. Damit wird es beispielsweise möglich, die Sichtschale schwenkbar anzuordnen. Beispielsweise kann die Sichtschale bei einem Frontalstoß mit einer nach oben ausschwenkenden Lenksäule ebenfalls ausschwenken. Dabei kann die Insassensicherheit zusätzlich dadurch verbessert werden, daß eine in Ober- und Unterschale geteilte Sichtschale verwendet wird, wobei die Oberschale schwenkbar befestigt ist und bei einem Frontalstoß vorgegebener Stärke sensorausgelöst vor die Frontscheibe geschwenkt wird, so daß sie bei geeigneter Formgebung sowohl den Kopfschutz der Insassen verbessert als auch bei der Schwenkbewegung eine Durchtrittsöffnung für einen Beifahrerairbag freigeben kann, ohne das Gefahrenpotential herkömmlicher Klappen, bei denen Abrisse möglich sind, wobei dann die Abrißteile in den Fahrgastraum geschleudert werden. Die Unterschale bleibt bei dieser Lösung als Knieschutz ortsfest. Dieser Sicherheitsgewinn wird dadurch ermöglicht, daß die Luftführungen integraler Bestandteil der Sichtschale sind und daher keine komplizierten Anschlußteile benötigt werden, die die Schwenkbewegung erschweren können. Dabei kann das Luftführungssystem mit zentralen Öffnungen direkt, d.h. ohne störende Zwischenglieder auf entsprechenden Öffnungen der Heiz- oder Klimaanlage gedichtet aufliegen, so daß alle zum Innenraum weisenden Elemente des Luftführungssystems komplett vorkonfektioniert in die Sichtschale integrierbar sind.

Werden geteilte Sichtschalen verwendet, deren obere Schalen vor die Windschutzscheibe schwenkbar sind, so ist es vorteilhaft, diese Schwenkbewegung durch den sich entfaltenden Beifahrerairbag selbst auszulösen. In diesem Fall kann dessen Sensor für die Sichtschalenschwenkung mit genutzt werden, und das Aufblasen des Airbag wir gedämpft. Die schwenkbare Oberschale kann dann in ihrer Offenstellung einrasten.

Die Schutzwirkung der geschwenkten Oberschale kann noch verbessert werden, wenn im Bereich eines möglichen Kopfaufpralles ein aufblasbarer Luftschlauch zwischen dem Hartschaumkörper und der mit Weichschaum hinterlegten Kaschierung angeordnet ist. Bei einem Frontalstoß kann, durch einen Sensor ausgelöst, ein zusätzlich schützender Polsterbereich erzeugt werden. Da die Kaschierung in ihrer Dehnfähigkeit begrenzt ist, können in den Hartschaumkörper eingelegte Falten, die beim Aufblasen des Luftschlauches herausgezogen werden, dafür sorgen, daß der Luftschlauch hinreichend weit aufblasbar ist. Aber auch vorgeschwächte Reißnähte, wie sie von Abdecksystemen "unsichtbarer" Airbags bekannt sind, sind anwendbar, um die Expans'ionsfähigkeit des Sicherheitsschlauches sicherzustellen.

Das zum Cockpitsystem gehörende standardisierte Gehäuse für die Klima- bzw. Heizungsaggregate ist selbsttragend ausgebildet, und zwar nicht nur in Bezug auf seine Stützfunktion für das Gesamtcockpit. Es kann unabhängig vom Fahrzeugtyp gestaltet sein und nimmt alle Bauteile der heiz- oder Klimaanlage, wie beispielsweise Lüfter, Lüftermotoren, Wärmetauscher und Filter auf.

Die Filter sind dabei an dem Standardgehäuse so angebracht, daß ihr Wartungsbereich durch eine Öffnung im Frontblech frei in den Motorraum ragt und dort gut zugänglich ist. Alternativ kann der Wartungsbereich der Filter auch in den C-förmigen Versteifungskasten der Karosserie ragen, und dort durch eine verschließbare Öffnung zugänglich sein.

Besonders vorteilhaft ist eine Unterteilung in eine motorraumzeitig angeordnete Gebläseeinheit, die den Gebläsemotor, den Filter und die Steuerklappe Umluft/Frischluft in einem Gehäuse zusammengefaßt enthält, und eine Klimaeinheit, die fahrgastseitig, wie beschrieben, die Stützfunktion des Cockpits mit übernimmt. Die motorraumseitige Gebläseeinheit kann dabei mit auf der Baueinheit angeordnet und vormontiert werden, auf der Lenksäule und dem Pedalwerk sich befinden.

Die Klimaeinheit kann zweckmäßigerweise in Funktionsebenen gegliedert werden, die jeweils gleichartige Funktionen auf Platinen, Zwischenböden und/oder Einschüben zusammenfassend angeordnet enthalten.

Beispielsweise können die Funktionsebenen
- Wärmetauscher mit Heizregister und ggf. Verdampfer,
- Luftmengenregelung und
- Luftverteilung
vertikal übereinander angeordnet werden, wobei durch Standardisieren der Abmessungen von Gebläse- und Klimateil und durch möglichen Austausch von unterschiedlich wirkenden Funktionsebenen sowohl die Fertigung verbilligt und vereinfacht werden kann, als auch eine Vielzahl von Anforderungen berücksichtigt werden kann.

Die Oberseite des C-förmigen Karosseriekastens des Sicherheitssystems kann in einfacher Weise zur Wasserableitung der Frontscheibe genutzt werden. Damit ist sichergestellt, daß der C-förmige Versteifungskasten der Karosserie keine Beeinträchtigung der Karosseriefunktion bedeutet.

Die Erfindung sei nunmehr anhand von in den Figuren dargestellten Ausführungsbeispielen näher beschrieben.

### Es zeigen:

- FIG. 1: schematisch die Anordnung des aus dem Kastenprofil, den A-Säulen, dem Querträger und dem flächigen Formstück gebildeten Sicherheitssystems,
- FIG. 2: eine Ausführungsform des Formstückes,
- FIG. 3: die Querschnitte I·/·I und II·/·II des Formstückes gemäß FIG. 2,
- FIG. 4: die Querschnitte des Formstückes gemäß FIG. 2,
- FIG. 5: ein Querträgersystem nach dem Stand der Technik in Explosivdarstellung,
- FIG. 6: schematisierte Querschnitte durch ein Cockpit an unterschiedlichen Stellen; und zwar unter Verwendung des Formstückes gem. FIG. 2,
- FIG. 7: schematisierte Querschnitte durch ein Cockpit an unterschiedlichen Stellen; und zwar unter Verwendung des Formstückes gem. FIG. 2,
- FIG. 8: einen schematisierten Querschnitt durch ein Cockpit im Bereich des Heiz- und Klimageaggregates, und zwar am Beispiel eines Formstückes in Blechausführung mit integriertem Querträger,
- FIG. 9: den Gebläseteil des Klimaaggregates zu schematisierter Perspektivdarstellung;
- FIG. 10: einen schematisierten Querschnitt durch ein Cockpit im Bereich des Pedalwerks und der Lenksäule, ebenfalls am Beispiel eines Formstückes in Blechausführung mit integriertem Querträger, und
- FIG. 11: in vereinfachter Darstellung eine klappbare Sichtschale zum verbesserten Schutz bei Kopfaufprall.

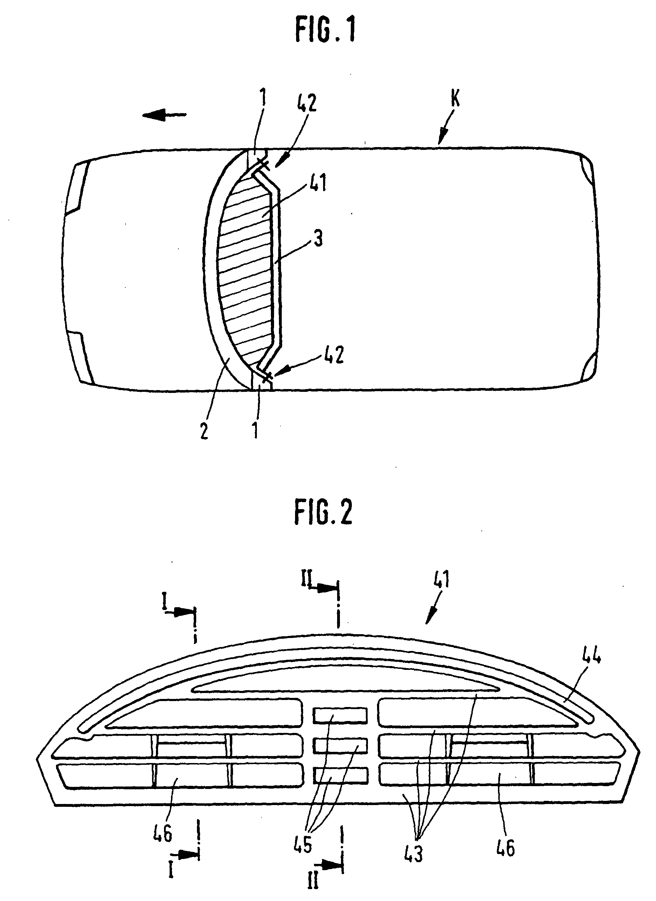

In FIG. 1 ist die schematisch als Umriß dargestellt Karosserie mit K bezeichnet. Der Pfeil gibt die Fahrtrichtung an. Die A-Säulen 1, das unter der unteren Kante der Windschutzscheibe verlaufende vorzugsweise C-förmige Kastenprofil 2 der Karosserie und der Querträger 3 bilden zusammen mit dem flächigen Formstück 41 das Sicherheitssystem bei einem Frontalstoß, sichern aber auch, wegen der Einbeziehung der A-Säulen in die ringförmige Versteifung, die Insassen zusätzlich zu anderen Maßnahmen gegen einen Seitenaufprall.

Der Querträger 3 ist mithilfe der Schrägflächen 42 toleranzausgleichend mit den A-Säulen verbunden.

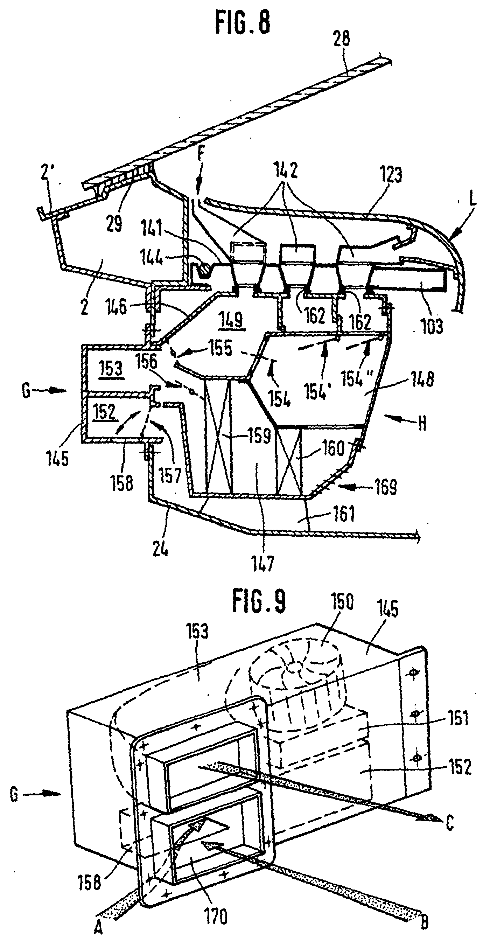

In FIG. 2 ist das flächige Formstück 41 in Draufsicht dargestellt. Die Versteifungsrippen 43 verlaufen quer zur Fahrtrichtung, also parallel zum Querträger 3. Bei einem Frontalstoß werden sie in dieser Anordnung zeitlich nacheinander verformt und verlängern so die Dauer der Energieabsorption. Die Durchbrüche 45 dienen als Lufdurchlässe vom Heizungsaggregat (H in FIG. 8) zum Luftleitsystem (142 in FIG. 8). Das Formstück 41 besitzt zum Fußraum hin die Ausformungen 46, an denen z.B. die Lenksäule und das Handschuhfach befestigt werden können. Die Führungsrinne 44 dient zur Aufnahme eines Kabelbaumes.

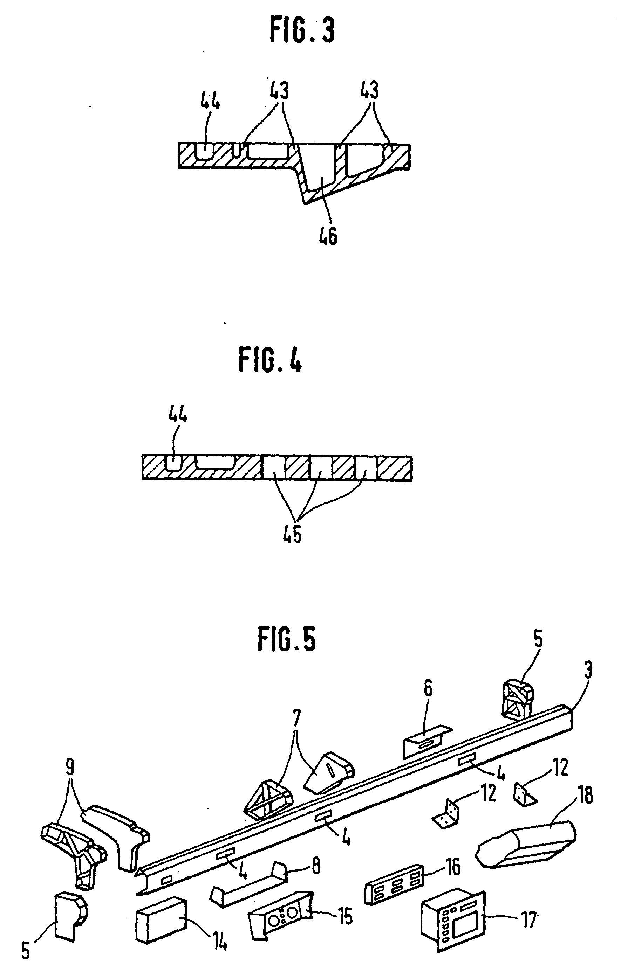

Die FIGN. 3 und 4 ergänzen die Darstellung der Figur 2 anhand der Schnitte I·/·I und II·/·II.

FIG. 5 zeigt zum Vergleich ein übliches Cockpitsystem, bei dem die Funktions- und Bedienungselemente ausschließlich an einem Querträger befestigt sind. Die Ausschnitte 4 dienen der Führung der Kabelbäume; sie können als einfache Durchbrüche ausgeführt sein, oder mit Steckverbindungen bestückt sein, in denen die Kabelstränge enden. Zum Querträgersystem gehören weiterhin die Befestigungselemente 5 für die Befestigung des Querträgers 3 an den A-Säulen der Karosserie, die Lenksäulenaufhängung 9 und die Befestigung 7 für die Aufhängung des Trägerkastens der Heizungs- oder Klimaanlage. Diese Elemente sind bezüglich der Festigkeit höher beansprucht, sie sind daher verrippt ausgeführt. Die Befestigung 8 für eine Instrumentenkombination 15, die Aufhängung 6 des Handschuhkastens und die Befestigungswinkel 12 für den Airbag 18 sind Blechwinkel; ihre Beanspruchung ist geringer, so daß sie leichter und einfacher ausgeführt sein können. Das Bedienungspaneel 16 für die Heizungs- oder Klimaanlage und das elektronische Wegfindersystem 17 sind an der nicht dargestellten Klimaanlage befestigt und die Zentralelektronik 14 direkt an den Querträger angeflanscht.

Die FIG. 5 zeigt augenfällig, daß die Anordnung der zu einem Cockpitsystem gehörenden Bedienungs- und Funktionseinheiten auf einem flächigen Formstück gemäß FIG. 2 wesentlich einfacher und mit weniger Aufwand möglich ist, daß also ein erfindungsgemäßer Aufbau des Cockpits nicht nur sicherheitstechnische, sondern auch konstruktive Vorteile bietet.

Die FIGN. 6 und 7 zeigen das Cockpit gemäß einem Ausführungsbeispiel der Erfindung im schematischen Querschnitt. In FIG. 6, die die Verhältnisse im äußeren Bereich des Cockpits darstellt, sind der Querträger 3 und das flächige Formstück 41 erkennbar; eine Kombination, die die aus der Trägerschale 22, den Blechschalen 23' und 23" für die Luftführungskanäle 23, dem Partikelschaumkörper 25 und der mit dem Weichschaum 26 hinterfütterten Kaschierungsfolie 27 gebildete Sichtschale S trägt (die Befestigung der Sichtschale S am Querträger 3 und dem flächigen Formstück 41 ist aus Übersichtsgründen nicht dargestellt). Mit L und F sind die Luftaustrittsdüsen bezeichnet. Die Trägerschale 22 besteht beispielsweise aus einem geformten Holzfaserwerkstoff, der Partikelschaumkörper 25 aus geblähten PUR-Kugeln. Die Vorderwand 24 des Fahrgastraumes ist durch das Kastenprofil 2 ergänzt, das an seiner Oberseite die Wasserführung 2' besitzt, die das Wasser der Windschutzscheibe 28 ableitet, welche mit dem Kastenprofil 2 mit Hilfe der Dichtung 29 verbunden ist.

FIG. 7 ist ein Schnitt im Bereich eines Beifahrerairbags 18 und des Handschuhfaches 30. Für den Airbag 18 enthält die Sichtschale S (deren Einzelelemente in den FIGN. 6 und 7 gleiche Bezugszahlen tragen) einen aus den Blechformstücken 31 gebildeten, in den Partikelschaumkörper 25 eingeschäumten Führungskanal 40, der mit Hilfe der Befestigungswinkel 12 am Formstück 41 befestigt ist. Die Abdeckung des Führungskanals 40 ist als "unsichtbare" Abdeckung gestaltet, kann aber auch jeder anderen Ausführung nach dem Stand der Technik entsprechen. Das Handschuhfach 30 ist als komplette Funktionseinheit an der Ausformung 46 des Formstückes 41 befestigt, der Kabelbaum 144 frontseitig in der Rinne 44 geführt. Die in den Figuren 2 bis 4 sowie 6 und 7 dargestellte Ausführung des flächigen Formstückes 41 kann ein Spritzgußteil, zweckmäßigerweise faserverstärkt, sein. Aber auch Ausführungen als Kunststoff-Metall-Hybridverbund oder als Leichtmetall-Schmiedeteile sind möglich.

FIG. 8 zeigt den Schnitt durch ein erfindungsgemäßes Cockpit, bei dem das Formstück 141 als Blechformteil ausgeführt ist, das den Querträger 103 integriert enthält. Weiterhin ist die Luftführung nicht mehr in die Sichtschale 123 integriert, die nur noch Abdeckfunktion hat, sondern in das kastenförmige Luftleitsystem 142, das auf der Oberseite des Formstückes 141 montiert ist. An die Unterseite des Formstückes 142 ist die Klimaanlage H angeflanscht und mithilfe der Dichtungen 162 abgedichtet. Die Klimaanlage H besteht aus dem Gehäuse 146, das sich mittels der Stütze 161 gegen die Front-Bodenblechgruppe 24 und dabei gleichzeitig das gesamte Cockpit abstützt. Dabei kann das Heizungsgehäuse 146 unabhängig vom Fahrzeugtyp gestaltet werden, vorzugsweise quaderförmig, und durch spezielle Stützen 161 an den Fahrzeugtyp angepaßt werden. Das zum Fahrgastraum hin angeordnete Gehäuse H enthält die Funktionsebene 147 mit dem Heizregister 159 und dem Verdampfer 160. Mit 148 ist die Funktionsebene bezeichnet, die die Luftverteilung mithilfe von Drosselklappen regelt.

Die Drosselklappen 154, 154', 154" regeln dabei die Zuluft zu den Entfrosterdüsen, der Seitenbelüftung bzw. der Zentralbelüftung. Der Fußraum wird mithilfe des Gitters 169 direkt von der Funktionsebene 147 aus belüftet.

Die gesamte Funktionsebene 148 ist als Einschub ausgebildet, nach dessen Entfernung der Innenraum des Gehäuses 146 der Kontrolle zugänglich ist. Schließlich ist die Luftleitebene 149 der obere Abschluß des Gehäuses 146, das abgedichtet direkt an die Durchbrüche des Formstückes 45 (FIG. 2) anschließt. Die Drosselklappen 155 und 156 geben vor, ob der Luftstrom, wie dargestellt, durch die Register 159 und 160 geleitet und klimatisiert wird, oder ob untemperierte Luft verwendet wird.

Die zur Klimaanlage H gehörende Gebläseeinheit G ist motorraumseitig an die Stirnwand 24 angeflanscht. Im Gehäuse 145, das in die Ansaugebene 152 und die Blasebene 153 unterteilt ist, sind das Gebläse 150, der Filter 151 und die Verteilerklappe 157 untergebracht. FIG. 9 erläutert anhand einer perspektivischen Darstellung die Luftführung in der Gebläseeinheit G: Die Verteilerklappe 157 (in FIG. 9 nicht dargestellt, in ihrer Funktion aber aus FIG. 8 ersichtlich) deckt entweder die Frischluftöffnung 158 ab (Umluftbetrieb der Klimaanlage; Frischluft A ist abgesperrt) oder ermöglicht, alternativ den Eintritt 170 der Frischluft A (Frischluftbetrieb der Klimaanlage). Umluft B oder Frischluft A durchströmen den Filter 151 und werden durch das Gebläse 150 als Zuluft C der Klimaanlage H zugeführt. Bei dieser Anordnung ist die Wartung des Filters 151 in einfacher Weise vom Motorraum aus möglich.

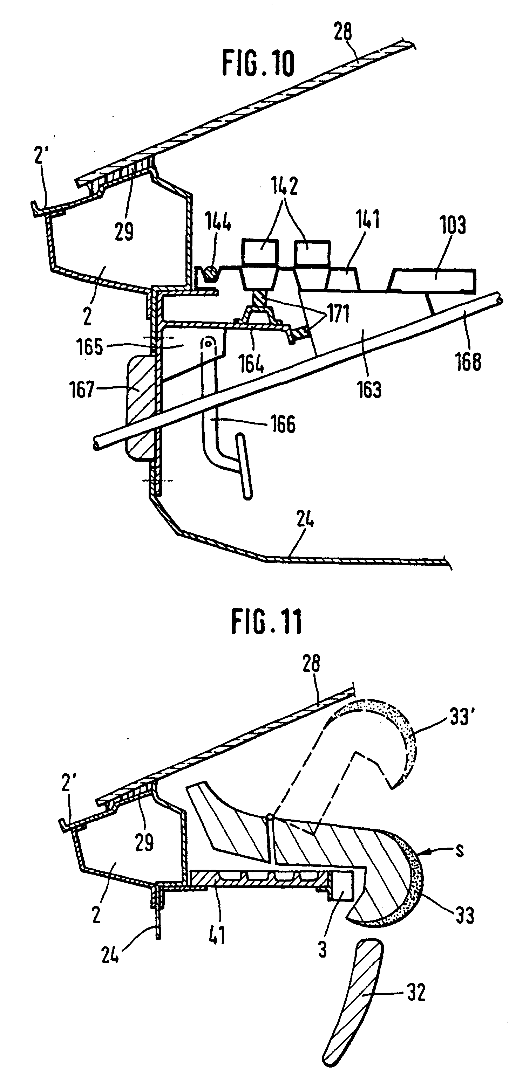

FIG. 10 zeigt den Schnitt durch ein Cockpit in der Ebene der Lenksäule. Bei sonst gleicher Benennung der Einzelelemente sind in FIG. 10 die Lenksäule mit 168 und das Pedalwerk mit 166 bezeichnet (nur 1 Pedal ist dargestellt). Die Lenksäule 168 ist mit Formstück 141 und Querträger 103 durch den Träger 163 verbunden; das Pedalwerk 166 ist auf dem winkelförmigen Trägerteil 164 montiert, und zwar mithilfe der Eckstücke 165, die gleichzeitig das Trägerteil 164 versteifen. Das Trägerteil 164 ist mittels der Schwingmetalle 171 federnd am Formstück 141 und an dem Lenksäulenträger 163 vormontiert, Einbautoleranzen sind also korrigierbar, und es wird nach dem Einbau des vormontierten und vorgeprüften Gesamtcockpits in der in FIG. 10 dargestellten Position durch Schrauben fixiert, wobei es einen Ausschnitt aus dem Frontblech 24 abdeckt, durch den gegebenenfalls Lenkhilfe und Bremskraftverstärker, in FIG. 10 unter der Bezugszahl 167 zeichnerisch zusammengefaßt, in dem Motorraum greifen. Der . Trägerteil 164 kann, wie üblich, gegenüber der Stirnwand 24 abgedichtet werden; desgleichen ist es zweckmäßig, den Hauptkabelstrang in einem Randausschnitt des Trägerteils 164 in den Innenraum zu führen, um ein umständliches "Einfädeln" des Hauptkabelstranges zu vermeiden. Bei beiden Maßnahmen wird aus Gründen der Übersichtlichkeit auf eine zeichnerische Darstellung in FIG. 10 verzichtet.

FIG. 11 schließlich erläutert die Möglichkeit, eine geteilte Sichtschale S als Aufprallschutz zu verwenden. Das obere Teil 33 der Sichtschale S ist klappbar befestigt. Die innere Struktur der Sichtschale S (Luftführung, Luftaustrittsdüsen) ist der Übersichtlichkeit halber nicht dargestellt. Das obere Teil 33 besitzt vorteilhaft unter der Kaschierung einen aufblasbaren Bereich. 32 ist ein ortsfestes unteres Teil der Sichtschale S, das bei einem Frontalstoß als Knieschutz dient. Bei einem Frontalstoß wird die Klappbewegung des Teils 33 (in der oberen Stellung mit 33' bezeichnet) der Sichtschale S sensorbetätigt ausgelöst und der aufblasbare Bereich zu einem Dämpfungsbereich des Teils 33' aufgeblasen, der dann im Aufprallbereich des Kopfes des Beifahrers vor der Windschutzscheibe 28 liegt. Um das Aufblasen dieses Bereiches nicht zu behindern, kann es zweckmäßig sein, hier ein System von Reißnähten in der Kaschierung vorzusehen, beispielsweise Querschnittsschwächungen der Kaschierungsfolie. Bei der Schwenkbewegung des oberen Teils 33 in die gestrichelt eingezeichnete Lage 33' vor der Frontscheibe 28 wird eine breite Durchtrittsöffnung für einen (nicht mit dargestellten) Airbag frei, der nun beispielsweise walzenförmig ausgebildet sein könnte. Die Schwenkbewegung des oberen Teils 33 kann durch eine gesonderte Hilfsvorrichtung betätigt werden, die durch einen Sensor ausgelöst wird. Zweckmäßigerweise kann sie jedoch auch durch den sich entfaltenden Beifahrerairbag selbst erfolgen. In diesem Fall wirkt die Massenträgheit des oberen Teils 33 einer zu rasanten Entfaltung des Airbags entgegen. Die Schwenkbewegung des oberen Teils 33 der Sichtschale 8 kann gegebenenfalls auch dazu benutzt werden, das Lenkrad mit nach oben zu verschwenken, wobei die Lenksäule einen entsprechenden Drehpunkt besitzen kann. Dadurch können auch im Bereich des Fahrzeuglenkers die Aufprallverhältnisse verbessert werden. Da bei dem erfindungsgemäßen Cockpit die Sichtschale nicht fest mit der Karosserie verbunden ist, ergeben sich für die Realisierung einer schwenkbaren Sichtschale oder eines schwenkbaren Teils von dieser keine grundsätzlichen Schwierigkeiten.

## Patentansprüche

1. Fahrzeugcockpit, zumindest bestehend aus einem Querträger (3), einer Sichtschale (S), einer Heizung- oder Klimaanlage (H) und Bedienelementen, als vormontierte Einbaueinheit in Fahrzeugen mit einem Aufprallsicherungsschutz, die ein unter der Frontscheibenkante sich erstreckendes Kastenprofil (2) der Karosserie (K) aufweist, das durch den Querträger (3) zu einem geschlossenen System ergänzt wird, und zumindest zwischen dem Kastenprofil (2) und dem Querträger (3) ein flächiges Formstück (41) montiert ist, das das Kastenprofil (2) und den Querträger (3) im Falle eines Frontalaufpralles energieverzehrend koppelt
**dadurch gekennzeichnet, daß** das Formstück (41) als Montageplatte für Funktions- und Bedienelemente dient.

2. Fahrzeugcockpit nach Anspruch 1, **dadurch gekennzeichnet, daß** die Kopplung des Kastenprofils (2) mit dem Querträger (3) durch eine linienförmige Krafteinleitung erfolgt.

3. Fahrzeugcockpit nach Anspruch 1 oder 2, **dadurch gekennzeichnet, daß** das flächige Formstück (41) versteifende Rippen besitzt.

4. Fahrzeugcockpit nach Anspruch 3, **dadurch gekennzeichnet, daß** die Mehrzahl der versteifenden Rippen des Formstückes (41) näherungsweise parallel zu dem Querträger (3) orientiert sind.

5. Fahrzeugcockpit nach einem der Ansprüche 1 bis 4, **dadurch gekennzeichnet, daß** der Querträger (3) in das Formstück (41) baueinheitlich integriert ist.

6. Fahrzeugcockpit nach einem der Ansprüche 1 bis 5, **dadurch gekennzeichnet, daß** das Formstück (41) eine Metall-Kunststoff-Hybridkonstruktion ist.

7. Fahrzeugcockpit nach einem der Ansprüche 1 bis 6, **dadurch gekennzeichnet, daß** das Formstück (141) ein gepreßtes Metallblech ist.

8. Fahrzeugcockpit nach mindestens einem der Ansprüche 1 bis 7, **dadurch gekennzeichnet, daß** zumindest der Querträger (3) an der Karosserie (K) im Bereich der A-Säulen (1) Mithilfe von toleranzausgleichenden Schrägflächen (42) befestigt wird.

9. Fahrzeugcockpit nach mindestens einem der Ansprüche 1 bis 8, **dadurch gekennzeichnet, daß** auf der Oberseite des Formstücks (41, 141) das Luftführungssystem (142) und auf seiner Unterseite das heiz- und/oder Klimagerät (K) fest montiert angeordnet sind, während eine Lenksäule (168), das Pedalwerk (166) und ein den Hauptkabelstrang führendes Trägerteil (164) Mithilfe nachgiebiger Bauelemente (171) (Schwingmetalle) fahrerseitig an der Unterseite des Formstückes (41, 141) vormontiert und am Frontblech (24) der Fahrgastzelle fixiert sind.

10. Fahrzeugcockpit nach einem der Ansprüche 1 bis 9, **dadurch gekennzeichnet, daß** beifahrerseitig ein Handschuhfach (30) als Kompletteinheit an der Unterseite des Formstückes (41, 141) fest montiert ist.

11. Fahrzeugcockpit nach mindestens einem der Ansprüche 1 bis 10, **dadurch gekennzeichnet, daß** das Formstück (41, 141) alle Funktions- und Bedienungselemente trägt und die Sichtschale (123) ausschließlich Abdeckfunktion hat.

12. Fahrzeugcockpit nach einem der Ansprüche 1 bis 11, **dadurch gekennzeichnet, daß** die verkleidende Sichtschale (S) mindestens zwei miteinander verbundene dünne Formschalen (23', 23") aufweist, die das Luftführungssystem (23) vorgeben, wobei diese Schalen (23', 23") mit einem voluminösen Hartschaumkörper (25) überdeckt und verbunden sind und die Sichtseite des Hartschaumkörpers (25) einer mit Weichschaum (26) hinterlegten Kaschierung (27) bedeckt ist.

13. Fahrzeugcockpit nach einem der Ansprüche 1 bis 12, **gekennzeichnet durch** nachstehenden Aufbau der Sichtschale (S):
eine Trägerschale (22) aus einem Holzfaserformstoff trägt das aus den dünnen Formschalen (23' und 23") gebildete Luftführungssystem (23),
die Trägerschale (22) und das Luftführungssystem (23) sind mit dem aus formstabilen Partikelschaum gebildeten Hartschaumkörper (25) überdeckt und flächig verbunden, wobei
der Hartschaumkörper (25) mit der Kaschierung (27), die mit dem Weichschaum (26) unterfüttert ist, sichtseitig überzogen sind.

14. Fahrzeugcockpit nach Anspruch 13, **dadurch gekennzeichnet, daß** der Hartschaumkörper (25) einen durch Formstücke (31) gebildeten Führungskanal (40) für einen Airbag eingeschäumt enthält, wobei die Abdeckung (40') des Führungskanals (40) als "unsichtbare" Airbagabdeckung ausgebildet ist.

15. Fahrzeugcockpit nach einem der Ansprüche 1 bis 14, **dadurch gekennzeichnet, daß** das Luftführungssystem (23) der Sichtschale (S) direkt mit der Luftaustrittsöffnung des Trägergehäuses (10, 10') der Heizungs- bzw. Klimaanlage abgedichtet verbunden ist.

16. Fahrzeugcockpit nach einem der Ansprüche 1 bis 15, **dadurch gekennzeichnet, daß** die Sichtschale (S) aus einer Ober- (33) und einer Unterschale (32) besteht, wobei die Oberschale (33) schwenkbar befestigt ist und bei einem Frontalstoß vorgegebener Mindeststärke vor die Frontscheibe (28) schwenkbar ist, derart, daß sie eine Durchtrittsöffnung für einen Airbag freigibt, und die Unterschale (32) ortsfest ist.

17. Fahrzeugcockpit nach Anspruch 16, **dadurch gekennzeichnet, daß** die Schwenkung des Oberteiles (33) der Sichtschale (S) durch den sich entfaltenden Airbag selbst erfolgt und das Oberteil (33) in der Offenstellung Mithilfe einer Rastvorrichtung gehalten wird.

18. Fahrzeugcockpit nach Anspruch 16 oder 17, **dadurch gekennzeichnet, daß** bei einem Frontalstoß vorgegebener Stärke sensorbetätigt Luftkissen aufgeblasen werden, die im Bereich eines möglichen Kopfaufpralls mindestens des Beifahrers zwischen dem Hartschaumkörper (25) und der mit Weichschaum (26) hinterlegten Kaschierung (27) des schwenkbaren Oberteils (33) der Sichtschale (S) angeordnet sind, wobei durch Dehnungsfalten und/oder vorgebildete Reißnähte der Kaschierung (27) eine gute Aufblasbarkeit der Luftkissen gewährleistet ist.

19. Fahrzeugcockpit nach einem der Ansprüche 1 bis 18, **dadurch gekennzeichnet, daß** ein Trägergehäuse (145) der Heizungs- bzw. Klimaanlage (H) selbsttragend ausgebildet ist und zumindest Staub- und/oder Pollenfilter (151) derart trägt, daß deren zu wartender Bereich frei vom Motorraum aus zugänglich ist.

20. Fahrzeugcockpit nach Anspruch 19, **dadurch gekennzeichnet, daß** der Filter (151) zumindest mit seinem zu wartenden Bereich in das versteifende Kastenprofil (2) ragt und dort Mithilfe einer verschließbaren Öffnung der Wartung zugänglich ist.

21. Fahrzeugcockpit nach Anspruch 19, **dadurch gekennzeichnet, daß** die Heizungs- und/oder Klimaanlage (H) in ein motorseitig angeordnetes Gebläseteil (G), mindestens umfassend den Gebläsemotor, das Gebläse (150), Luftleitungen für Zu- und Abluft und ein Gehäuse (145) gegliedert ist, und in eine Klimaeinheit, die im Fahrgastraum angeordnet ist, wobei die Klimaeinheit näherungsweise horizontal verlaufende, vertikal übereinander angeordnete Funktionsebenen enthält, die jeweils gleiche Funktionen zu Baugruppen zusammenfassen.

22. Fahrzeugcockpit nach Anspruch 21, **dadurch gekennzeichnet, daß** die Baugruppen (Funktionsebenen) der Klimaeinheit auf Platinen und/oder Einschüben auswechselbar angeordnet sind.

23. Fahrzeugcockpit nach einem der Ansprüche 1 bis 22, **dadurch gekennzeichnet, daß** das Kastenprofil (2) der Karosserie (K) als Wasserableitung (2') der Frontscheibe (28) ausgebildet ist.

## Claims

1. Vehicle cockpit, comprising at least a transverse support (3), a visible shell (S), a heating or air-conditioning unit (H) and operating elements as a pre-assembled installation unit in vehicles with impact protection, comprising a box profile (2) of the body (K) extending below the front screen edge and which is by means of the transverse support (3) completed into a closed system, and at least between the box profile (2) and the transverse support (3) is mounted a surface shape (41), which in case of a frontal impact couples the box profile (2) and the transverse support (3) in a load-consuming manner, **characterised in that** the shape (41) serves as an assembly plate for functional and operational elements.

2. Vehicle cockpit according to Claim 1, **characterised in that** coupling of the box profile (2) to the transverse support (3) is carried out by a linear introduction of a load.

3. Vehicle cockpit according to Claim 1 or 2, **characterised in that** the surface shape (41) has stiffening webs.

4. Vehicle cockpit according to Claim 3, **characterised in that** the plurality of the stiffening webs of the shape (41) are oriented virtually parallel to the transverse support (3).

5. Vehicle cockpit according to one of Claims 1 to 4, **characterised in that** the transverse support (3) is as a module integrated into the shape (41).

6. Vehicle cockpit according to one of Claims 1 to 5, **characterised in that** the shape (41) is of a metal-plastic hybrid structure.

7. Vehicle cockpit according to one of Claims 1 to 6, **characterised in that** the shape (41) is a pressed piece of sheet metal.

8. Vehicle cockpit according to at least one of Claims 1 to 7, **characterised in that** at least the transverse support (3) is mounted on the body (K) in the area of the A-columns (1) with the aid of tolerance compensating slanted surfaces (42).

9. Vehicle cockpit according to at least one of Claims 1 to 8, **characterised in that** on the top of the shape (41, 141) is firmly mounted the air-ducting system (142), and on its bottom the heating and/or air-conditioning unit (K), whilst a steering column (168), the pedal works (166) and a support element (164) which carries the main cable assembly are pre-assembled with the aid of resilient assembly components (171) (vibratory metals) on the driver's side at the bottom of the shape (41,141) and fixed to the front metal sheet (24) of the passenger cabin.

10. Vehicle cockpit according to one of Claims 1 to 9, **characterised in that** a glove compartment (3) is firmly mounted on the co-driver's side as a complete unit on the bottom of the shape (41, 141).

11. Vehicle cockpit according to at least one of Claims 1 to 10, **characterised in that** the shape (41, 141) supports all functional and operational elements, and the visible shell (123) exclusively serves a cover function.

12. Vehicle cockpit according to one of Claims 1 to 11, **characterised in that** the panelling visible shell (S) comprises at least two joined thin shaped shells (23', 23") which set the air-ducting system (23), and these shells (23', 23") are covered and joined by voluminous hard-foam bodies (25), and the visual side of the hard-foam body (25) is covered by a laminate (27) which is backed by a soft foam (26).

13. Vehicle cockpit according to one of Claims 1 to 12, **characterised by** the following structure of the visible shell (S):
a support shell (22) of a wood fibre material supports the air-ducting system (23) which is formed from thin shaped shells (23' and 23");
the support shell (22) and the air-ducting system (23) are covered and surface joined by hard-foam bodies (25) which are formed by shape-resistant particle foam; and
the hard-foam body (25) with the laminate (27) which is backed with the soft foam (26) are at the visible side covered.

14. Vehicle cockpit according to Claim 13, **characterised in that** the hard foam body (25) includes a ducting channel (40), which is formed by shapes (31), for an airbag, and the cover (40') of the ducting channel (40) is structured as an "invisible" airbag cover.

15. Vehicle cockpit according to one of Claims 1 to 14, **characterised in that** the air-ducting system (23) of the visible shell (S) is directly linked to the air-outlet opening of the support housing (10, 10') of the heating or air-conditioning unit and sealed.

16. Vehicle cockpit according to one of Claims 1 to 15, **characterised in that** the visible shell (S) is composed of an upper (33) and a lower shell (32), and the upper shell (33) is pivotally mounted and, in the event of a frontal blow of predetermined minimum force, pivotal to in front of the front window (28) in such a manner that it opens a passage opening for an airbag, and the lower shell (32) is spatially fixed.

17. Vehicle cockpit according to Claim 16, **characterised in that** the upper portion (33) of the visible shell (S) is pivoted by the unfolding airbag itself, and the upper portion (33) is held in the open position with the aid of a detent mechanism.

18. Vehicle cockpit according to Claim 16 or 17, **characterised in that,** in the event of a frontal blow of predetermined force, air cushions are inflated by way of sensors which are arranged in the area of a possible head impact of at least the co-driver between the, hard-form body (25) and the soft-foam (26) backed laminate (27) of the pivotal top section (33) of the visible shell (S), which ensures good inflation of the airbags due to stretch creases and/or preshaped tearing seams of the laminate (27).

19. Vehicle cockpit according to one of Claims 1 to 18, **characterised in that** a support housing (145) of the heating or air-conditioning unit (H)is designed to be selfsupporting and supports at least dust and/or pollen filters (151) in such a manner that their maintenance area is freely accessible from the engine compartment.

20. Vehicle cockpit according to Claim 19, **characterised in that** the filter (151) protrudes at least with its maintenance area into the stiffening box profile (2) where it is accessible for maintenance with the aid of a closable opening.

21. Vehicle cockpit according to Claim 19, **characterised in that** the heating and/or air-conditioning unit (H) is sectioned into a blower section (G) at the side of the motor, including at least the blower motor, the blower (150), airlines for air delivery and extraction and a housing (145), and into an air-conditioning unit which is arranged in the passenger cabin, and the air-conditioning unit includes virtually horizontally extending functional planes arranged on top of each other which combine respectively equal functions into assembly groups.

22. Vehicle cockpit according to Claim 21, **characterised in that** the assembly groups (functional planes) of the air-conditioning unit are exchangably arranged on plate bars and/or inserts.

23. Vehicle cockpit according to one of Claims 1 to 22, **characterised in that** the box profile (2) of the body (K) is designed for water removal of the front window (28).

## Revendications

1. Tableau de bord de véhicule, constitué au moins par une traverse (3), une coque visible (S), une installation de chauffage et/ou de climatisation (H) et des éléments de commande, sous la forme d'une unité de construction préassemblée dans des véhicules comportant un système de protection contre les chocs, et qui possède un profil de boîte (2) de la carrosserie (K), qui s'étend au-dessous du bord du pare-brise, est complété par la traverse (3) pour former un système fermé, et dans lequel au moins entre le profil en forme de boîte (2) et la traverse (3) est montée une pièce de forme plane (41), qui accouple le profilé en forme de boîte (2) et la traverse (3) d'une manière absorbant l'énergie dans le cas d'un choc frontal, **caractérisé en ce que** la pièce de forme (41) sert de plaque de montage pour des éléments fonctionnels et des éléments de commande.

2. Tableau de bord de véhicule selon la revendication 1, **caractérisé en ce que** l'accouplement du profil en forme de boîte (2) au support transversal (3) s'effectue au moyen de l'application de force linéaire.

3. Tableau de bord de véhicule selon la revendication 1 ou 2, **caractérisé en ce que** la pièce de forme plane (41) possède des nervures de renforcement.

4. Tableau de bord de véhicule selon la revendication 3, **caractérisé en ce que** la multiplicité des nervures de renforcement de la pièce de forme (41) sont orientées presque parallèlement à la traverse (3).

5. Tableau de bord selon l'une des revendications 1 à 4, **caractérisé en ce que** la traverse (3) est intégrée pour former une unité de construction dans la pièce de forme (41).

6. Tableau de bord selon l'une des revendications 1 à 5, **caractérisé en ce que** la pièce de forme (141) est une structure hybride métal - matière plastique.

7. Tableau de bord de véhicule selon l'une des revendications 1 à 6, **caractérisé en ce que** la pièce de forme (41) est une tôle métallique emboutie.

8. Tableau de bord de véhicule selon au moins l'une des revendications 1 à 7, **caractérisé en ce qu'**au moins la traverse (3) est fixée à la carrosserie (K) au niveau des montants (A1) à l'aide de surfaces obliques (42) réalisant une compensation de tolérances.

9. Tableau de bord de véhicule selon au moins l'une des revendications 1 à 8, **caractérisé en ce que** le système (142) de guidage de l'air est monté de façon fixe sur le côté supérieur de la pièce de forme (41, 141) et que l'installation de chauffage et/ou de climatisation (K) est montée fixe sur la face inférieure de la pièce de forme, tandis qu'une colonne de direction (168), le mécanisme à pédales (166) et une partie de support (164) guidant la faisceau principal de câbles sont préassemblés, côté conducteur, à l'aide de composants flexibles (171) (métaux caoutchoutés) à la face inférieure de la pièce de forme (41, 141) et sont fixés sur la tôle avant (24) de l'habitacle.

10. Tableau de bord de véhicule selon l'une des revendications 1 à 9, **caractérisé en ce que**, côté passager avant, une boîte à gants (30) est montée fixe sous la forme d'une unité complète sur la face inférieure de la pièce de forme (41, 141).

11. Tableau de bord de véhicule selon au moins l'une des revendications 1 à 10, **caractérisé en ce que** la pièce de forme (41, 141) porte tous les éléments fonctionnels et de commande et que la coque visible (123) a exclusivement une fonction de masquage.

12. Tableau de bord de véhicule selon l'une des revendications 1 à 11, **caractérisé en ce que** la coque visible (S), qui sert d'habillage, comporte au moins deux coques moulées minces (23', 23"') reliées entre elles et qui définissent le système (23) de guidage de l'air, ces coques (23', 23") étant recouvertes par et reliées à un corps en matériau mousse volumineux (25), et le côté visible du corps en matériau mousse (25) est recouvert d'un doublage (27) derrière lequel est appliquée une mousse souple (26).

13. Tableau de bord de véhicule selon l'une des revendications 1 à 12, **caractérisé par** l'agencement indiqué ci-après de la coque visible (S):
une coque de support (22) formée d'un matériau formé de fibres de bois porte le système de guidage de l'air (23), qui est formé par les coques moulées minces (23' et 23"),
la coque de support (22) et le système de guidage d'air (23) sont recouverts et
est reliés à plat par le corps en matériau mousse (25) formé d'une mousse de particules de forme stable, le corps en matériau mousse (25) étant recouvert sur le côté visible par le doublage (27), au-dessous duquel est inséré la mousse souple (26).

14. Tableau de bord pour véhicule selon la revendication 13, **caractérisé en ce que** le corps en matériau mousse (25) contient, sous la forme de mousse, un conduit de guidage (40), qui est formé par des pièces de forme (31), pour un airbag, le revêtement (40') du conduit de guidage (40) étant agencé sous la forme d'un revêtement « invisible » d'airbag.

15. Tableau de bord pour véhicule selon l'une des revendications 1 à 14, **caractérisé en ce que** le système (23) de guidage de l'air de la coque visible (S) est relié d'une manière étanche directement à l'ouverture de sortie d'air du boîtier de support (10, 10') de l'installation de chauffage ou de climatisation.

16. Tableau de bord de véhicule selon l'une des revendications 1 à 15, **caractérisé en ce que** la coque visible (S) est constituée par une coque supérieure (33) et une coque inférieure (32), la coque supérieure (33) étant fixée de manière à pouvoir pivoter, et pouvant pivoter, dans le cas d'un choc frontal d'une intensité minimale prédéterminée, en avant du pare-brise (28) de manière à libérer une ouverture de passage pour un airbag, et que la coque inférieure (32) est montée fixe.

17. Tableau de bord de véhicule selon la revendication 16, **caractérisé en ce que** le pivotement de la partie supérieure (33) de la coque visible (S) est réalisée au moyen de l'airbag lui-même, qui se déploie, et que la partie supérieure (33) est maintenue dans la position ouverte à l'aide d'un dispositif d'encliquetage.

18. Tableau de bord de véhicule selon la revendication 16 ou 17, **caractérisé en ce que** dans le cas d'un choc frontal d'une intensité prédéterminée, des coussins d'air sont gonflés d'une manière actionnée par un capteur, les coussins d'air étant disposés dans la zone d'un choc possible de la tête au moins du passager avant, entre le corps en matériau mousse (25) et le doublage (27), derrière lequel est disposé une mousse souple (26), de la partie supérieure pivotante (33) de la coque visible (S), une bonne capacité de gonflage des coussins d'air étant garantie par des fentes de dilatation et/ou des cordons d'arrachement préformés du doublage (27).

19. Tableau de bord de véhicule selon l'une des revendications 1 à 18, **caractérisé en ce qu'**un boîtier de support (145) de l'installation de chauffage ou de climatisation (H) est formé de manière à être autoportant et porte au moins des filtres à poussières et/ou à pollen (151) de telle sorte que sa partie, qu'il faut entretenir, est librement accessible à partir de l'espace moteur.

20. Tableau de bord de véhicule selon la revendication 19, **caractérisé en ce que** le filtre (151) pénètre au moins par sa partie, qui doit être entretenue, dans le profil de renforcement en forme de boîte (2) et y est accessible à des fins d'entretien, à l'aide d'une ouverture pouvant être fermée.

21. Tableau de bord de véhicule selon la revendication 19, **caractérisé en ce que** l'installation de chauffage et/ou de climatisation (H) est subdivisée en une partie formant ventilateur (G) disposée côté moteur, comprenant au moins le moteur du ventilateur, le ventilateur (150), des canalisations d'air pour l'amenée et l'évacuation d'air et un carter (145), et en une unité de climatisation, qui est disposée dans l'habitacle, l'unité de climatisation contenant des plans fonctionnels approximativement horizontaux et superposés verticalement, qui rassemblent respectivement des fonctions identiques pour former des modules.

22. Tableau de bord de véhicule selon la revendication 21, **caractérisé en ce que** les modules (plans fonctionnels) de l'installation de l'unité de climatisation sont disposés d'une manière interchangeable sur des platines et/ou des tiroirs.

23. Tableau de bord de véhicule selon l'une des revendications 1 à 22, **caractérisé en ce que** le profilé en forme de boîte (2) de la carrosserie (K) est agencé sous la forme d'une gouttière (2') du pare-brise (28).
